# EUROPÄISCHE PATENTSCHRIFT

(11) **EP 0 636 466 B1**
(45) Veröffentlichungstag und Bekanntmachung des Hinweises auf die Patenterteilung: **22.01.1997**
(21) Anmeldenummer: 94111095.9
(22) Anmeldetag: 16.07.1994
(51) Int. Cl.: B29C 47/00, B29C 47/12, B29C 47/06

(54) **Verfahren zur Herstellung von Rippenrohren aus Kunststoff**
Method for producing corrugated tubes from plastic material
Méthode pour la production de tubes ondulés en matière plastique

(30) Priorität: 26.07.1993 DE 4325021
(43) Veröffentlichungstag der Anmeldung: 01.02.1995
(73) Patentinhaber: UNICOR GmbH Rahn Plastmaschinen, D-97437 Hassfurt (DE)
(72) Erfinder:
(74) Vertreter: LOUIS, PÖHLAU, LOHRENTZ & SEGETH

(56) Entgegenhaltungen:
- EP-A- 0 208 055
- DE-A- 2 042 031
- DE-A- 2 316 835
- DE-U- 8 509 929
- US-A- 3 496 601
- US-A- 4 958 770
- NEUE VERPACKUNG, Nr.11, 1977, HEIDELBERG DE Seiten 1436 - 1444 G. MENGES & E. HABERSTROH 'Verwertung von Kunststoffabfällen über die Schmelze'

## Beschreibung

Die Erfindung betrifft ein Verfahren zur Herstellung von Rippenrohren aus Kunststoff, die eine Innenschicht mit einer glatten Innenrohrfläche und eine Außenschicht mit einer gewölbten Außenrohrfläche aufweisen, wobei das Material für die Innenschicht und das Material für die Außenschicht getrennt voneinander durch einen Spritzkopf in einen Formhohlraum extrudiert wird, der durch einen an den Spritzkopf anschließenden Kühldorn und die Formbacken eines Corrugators festgelegt ist, wobei eine Schicht des Rohres von einem mittels eines chemischen Treibmittels expandierenden Schaum gebildet ist.

Ein solches Verfahren ist aus der DE 41 28 654 A1 bekannt. Dort wird ein mehrschichtiges Leitungsrohr aus Kunststoff realisiert, das insbes. für Abwässer oder Kabel vorgesehen ist. Das besagte Leitungsrohr weist eine glatte Innenrohrfläche auf und ist mit einem damit verbundenen gewellten und kompakten Außenrohr ausgebildet. Zwischen der Innenrohrfläche und dem Außenrohr ist ein Zwischenrohr vorgesehen, das eine andere Beschaffenheit aufweist als das Außenrohr. Vorzugsweise besteht das Zwischenrohr aus einem Schaummaterial. Dort ist also in jedem Fall ein gewelltes Außenrohr vorhanden, was einen entsprechend ausgebildeten Spritzkopf erforderlich macht. Zur Realisierung des besagten Außenrohres ist es erforderlich, den entsprechenden äußeren kompakten Massestrom für das Außenrohr nach dem Austritt aus dem Spritzkopf mittels Druckluft gegen die Formbacken des Corrugators zu pressen oder mittels eines Vakuums an die Formbacken des Corrugators anzusaugen, wonach eine Entformung und Abkühlung erfolgt. Das bedingt einen nicht zu vernachlässigenden Aufwand. Außerdem handelt es sich dort um ein mindestens dreischichtiges Verbundrohr, bestehend aus dem gewellten Außenrohr, dem glatten Innenrohr und der dazwischen befindlichen Zwischenschicht aus mittels eines chemischen Treibmittels expandiertem Schaum, wobei die Zwischenschicht entweder parallel zum glatten zylindrischen Innenrohr vorgesehen ist oder den Zwischenraum voll ausfüllt. Außenrohr, Zwischenrohr und Innenrohr können aus PVC, PE und/oder PP hergestellt sein. Bspw. können dort alle Rohrschichten aus demselben Material hergestellt sein, wobei das Zwischenrohr eine Schaum- oder eine kompakte Struktur aufweist und aus einem originären Kunststoff oder aus einem Recyclat-Kunststoff bestehen kann.

Aus dem DE-U-8 509 929 ist ein Kunstoffrohr aus Polyethylen mit einer auf seiner Außenseite koextrudierten und wärmebehandelten Isolierschicht aus einem geschlossenzelligen Polyethylen-Schaum zu entnehmen.

Aus der US-A-34 96 601 ist ein Stopfwerk bzw. eine Zwangszuführung bekannt, die einem Extruder zugeordnet ist. Diese Zwangszuführung weist ein trichterförmiges Gehäuse auf, in welchem eine Schneckeneinrichtung drehbar gelagert angeordnet ist. Die Schneckeneinrichtung weist eine zylindrische Schnecke sowie ein rahmenförmiges Rührelement auf, das auf der vom Extruder entfernten Oberseite der Schneckeneinrichtung vorgesehen ist.

Ein Stopfwerk bzw. eine Zwangszuführung, die einem Extruder zugeordnet ist, ist auch aus der US-A-4 958 770 bekannt. Diese Zwangszuführung weist eine zylindrische Schnecke und ein der zylindrischen Schnecke vorgeordnetes Flügelelement auf, wobei die zylindrische Schnecke in einem zylindrischen Förderkanal und das Flügelelement in einem trichterförmigen Gehäuse vorgesehen sind. Der zylindrische Förderkanal befindet sich zwischen dem trichterförmigen Gehäuse und dem Extruder.

Der Erfindung liegt die Aufgabe zugrunde, ein Verfahren der eingangs genannten Art zu schaffen, wobei es in einfacher Weise möglich ist, Rippenrohre aus nur zwei Schichten vergleichsweise einfach und preisgünstig herzustellen.

Diese Aufgabe wird dadurch gelöst, daß als Material für die ein geripptes Längsprofil aufweisende Außenschicht ein nicht sortenreines, gewaschenes und zerkleinertes Recyclat verwendet wird, das mit einem geeigneten Treibmittel gemischt durch einen mit einem Stopfwerk bzw. einer anderen Zwangszuführung versehenen ersten Extruder in den Spritzkopf eingebracht wird, aus dem es vom neuwertigen Material für die rohrförmige Innenschicht getrennt und diese konzentrisch umgebend austritt, und das Material für die Außenschicht nach dem Austritt aus dem Spritzkopf im Raum zwischen der Innenschicht und den Formbacken des Corrugators aufschäumt.

Erfindungsgemäß kommt für die Außenschicht des Rippenrohres also ein nicht sortenreines und nur mechanisch zerkleinertes Recyclat zur Anwendung. Eine Regranulierung kann erfindungsgemäß also entfallen. Bei dem Recyclat kann es sich um ein Gemisch verschiedener Polyolefine wie bspw. LDPE, MDPE, HDPE, PP o.dgl. handeln. Ein weiterer Vorteil besteht darin, daß infolge der erfindungsgemäßen Wiederverwendung des Recyclats Deponiekosten vermieden werden, was unter Umweltgesichtspunkten bedeutsam ist. Bei dem dem gewaschenen und zerkleinerten Recyclat zugemischten Treibmittel kann es sich z.B. um Hydrocerol CF 40E (Warenzeichen der Fa. Boehringer Ingelheim KG.) handeln, das in Form eines weißen Zylindergranulats zur Verfügung steht.

Da die Formung der Außenschicht durch das dem gewaschenen und zerkleinerten Recyclat zugemischte Treibmittel erfolgt, ist in vorteilhafter Weise zur Formung der besagten Außenschicht keine eigene Luftführung erforderlich, sondern es ist ausreichend, wenn bei der Durchführung des erfindungsgemäßen Verfahrens zwischen der Innenschicht und dem Kühldorn Luft zugeführt wird. Diese Luftzuführung erfolgt zweckmäßigerweise durch den Spritzkopf in Richtung zum Kühldorn.

Wie bereits erwähnt worden ist, wird für die Außenschicht vorzugsweise ein beliebiges Gemisch gängiger Polyolefine außer PVC verwendet. Für die Innenschicht kommt vorzugsweise ein sortenreines Kunststoffmaterial zur Anwendung. Hierbei handelt es sich bspw. um Polyethylen.

Der erste Extruder kann zum Mischen von gewaschenem und zerkleinertem, nicht sortenreinem Recyclat mit einem geeigneten Treibmittel mit einem Stopfwerk bzw. einer anderen Zwangszuführung versehen sein. In dem zum ersten Extruder zugehörigen Stopfwerk bzw. der Zwangszuführung erfolgt die Mischung des gewaschenen und zerkleinerten, nicht sortenreinen Recyclats mit dem Treibmittel, wobei durch das Stopfwerk bzw. insbes. im ersten Extruder ein solcher Druck gegeben ist, daß das Treibmittel erst wirksam wird, nachdem der Extrusionsdruck im ersten Extruder bzw. im Spritzkopf stromabwärts nach der Düsenöffnung nicht mehr vorhanden ist, so daß es erst hier zum Aufschäumen des Materials für die Außenschicht kommen kann. Ein Kleben des aufschäumenden Materials für die Außenschicht an der entsprechenden Düsenöffnung wird vermieden, wenn die beiden Ringdüsenkanäle mit ihren Düsenöffnungen aus der dem Kühldorn zugewandten Stirnfläche des Spritzkopfs auf axial gleicher Höhe ausmünden. Hierdurch ist eine reibungslose Produktion der erfindungsgemäßen Rippenrohre möglich.

Das Stopfwerk bzw. die Zwangszuführung kann ein trichterförmiges Gehäuse aufweisen, in welchem eine Stopfschneckeneinrichtung gelagert ist, die eine erste kegelförmige Schnecke und eine sich durch diese zentral hindurcherstreckende zweite zylindrische Schnecke aufweist.

Ein ganz erheblicher Vorteil des erfindungsgemäßen Verfahrens besteht darin, daß das zur Anwendung gelangende Recyclat preiswert vorliegt, weil eine Artentrennung des Recyclats erfindungsgemäß nicht erforderlich ist. Wenn man bedenkt, mit welchem Aufwand eine solche Artentrennung der verschiedenen Kunststoffmaterialien bislang durchgeführt wird, kann abgeschätzt werden, welche Vorteile das erfindungsgemäße Verfahren aufweist.

Eine Vorrichtung zur Durchführung des erfindungsgemäßen Verfahrens ist in der Zeichnung dargestellt und wird nachfolgend beschrieben.Es zeigen:
- Fig. 1: längsgeschnitten einen Abschnitt der Vorrichtung,
- Fig. 2: längsgeschnitten eine Darstellung eines Details der Vorrichtung gemäß Fig. 1 in einem größeren Maßstab, und
- Fig. 3: eine schematische Darstellung eines bei der Vorrichtung zur Anwendung gelangenden Stopfwerks für das nicht sortenreine, gewaschene und zerkleinerte Recyclat und das zugehörige geeignete Treibmittel.

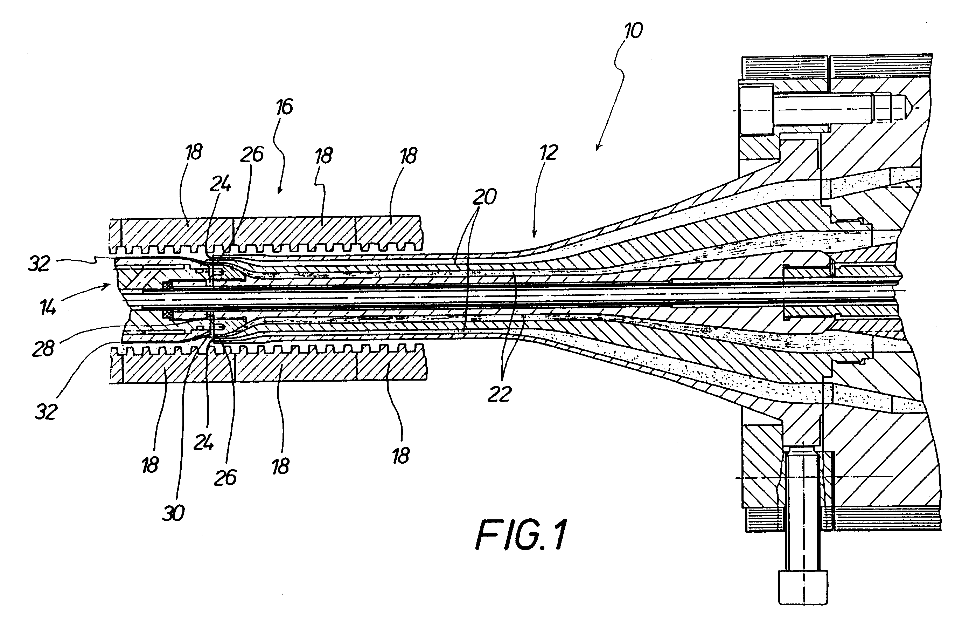

Fig. 1 zeigt abschnittweise längsgeschnitten eine Vorrichtung 10 zur Herstellung von Rippenrohren, wobei die Vorrichtung 10 einen Spritzkopf 12, einen in der Nachbarschaft des Spritzkopfes 12 und an diesen axial angrenzenden Kühldorn 14 sowie einen Corrugator 16 mit Formbacken 18 aufweist. Der Spritzkopf 12 ist mit einem ersten Ringdüsenkanal 20 und mit einem zweiten Ringdüsenkanal 22 ausgebildet, die zueinander konzentrisch vorgesehen sind und mit ihren Düsenöffnungen 24 und 26 aus der dem Kühldorn 14 zugewandten Stirnfläche 28 des Spritzkopfes 12 ausmünden. Die kreisringförmigen und zueinander konzentrischen Düsenöffnungen 24 und 26 münden also auf axial gleicher Höhe aus dem Spritzkopf 12 aus.

Der erste Ringdüsenkanal 20 ist mit einem (nicht gezeichneten) ersten Extruder und der zweite Ringdüsenkanal ist mit einem (nicht gezeichneten) zweiten Extruder verbunden.

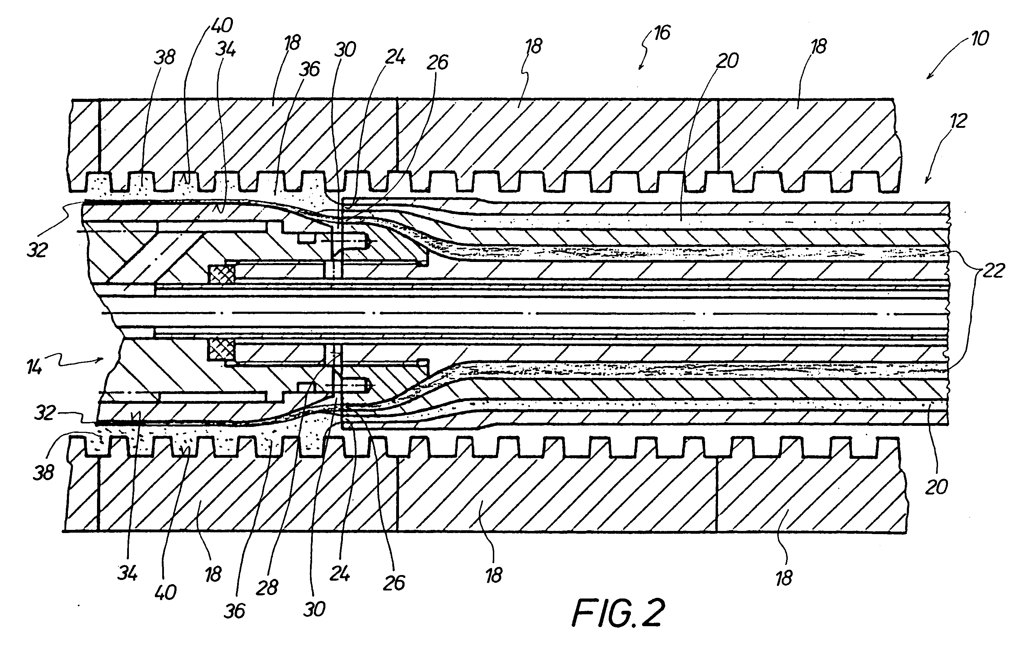

Wie insbes. aus Fig. 2, in der gleiche Einzelheiten mit denselben Bezugsziffern bezeichnet sind, wie in Fig. 1, ersichtlich ist, ist der Spritzkopf 12 mit einer Luftzuführung 30 ausgebildet, die in den Raum zwischen dem Kühldorn 14 und der aus der Düsenöffnung 26 des zweiten Ringdüsenkanals 22 austretenden Innenschicht 32 einmündet. Die Innenschicht 32 besteht aus einem sortenreinen Kunststoffmaterial, vorzugsweise aus Polyethylen. Die Innenschicht 32 gleitet nach dem Austreten aus der Düsenöffnung 26 über die glatte Außenoberfläche 34 des Kühldorns 14. Gleichzeitig tritt aus der Düsenöffnung 24 des ersten Ringdüsenkanals 20 das Gemisch aus gewaschenem, zerkleinertem, nicht sortenreinem Recyclat, das mit einem geeigneten Treibmittel gemischt ist, aus und schäumt unmittelbar nach dem Austritt aus der besagten Düsenöffnung 24 auf, wobei es den Zwischenraum 36 zwischen der Innenschicht 32 und den Formbacken 18 des Corrugators 16 vollständig ausfüllt. Erfindungsgemäß ergibt sich also ein zweischichtiges Rippenrohr aus Kunststoff bestehend aus der Innenschicht 32 mit einer glatten, der Außenoberfläche 34 des Kühldorns 14 entsprechenden Innenrohrfläche und einer Außenschicht 38 mit einer geeigneten bzw. gewellten Außenoberfläche 40 entsprechend den Formbacken 18 des Corrugators 16.

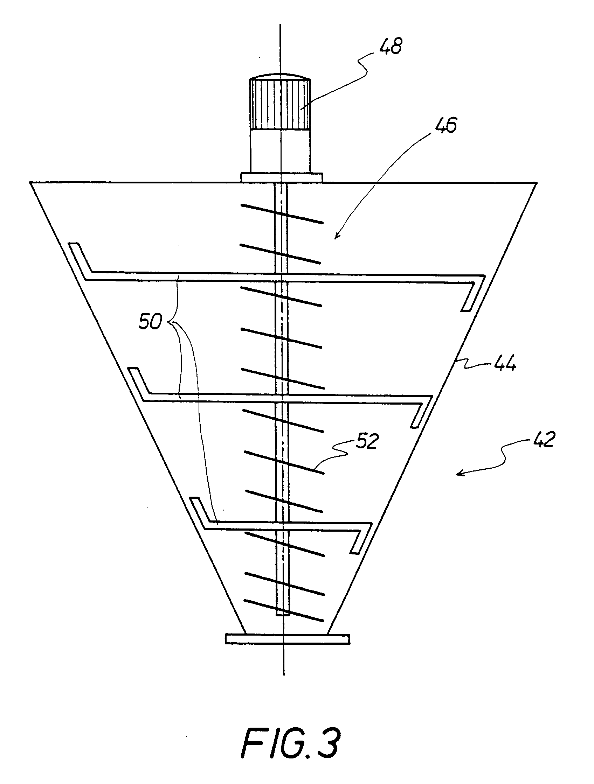

Fig. 3 zeigt ein Stopfwerk 42 mit einem sich konisch verjüngenden, trichterförmigen Gehäuse 44, in dem eine Stopfschneckeneinrichtung 46 drehbar gelagert ist. Die Stopfschneckeneinrichtugn 46 ist mit einem Antriebsmotor 48 verbunden, sie weist eine erste kegelförmige Schnecke 50 und eine zweite zylindrische Schnecke 52 auf, die sich zentral durch die kegelförmige erste Schnecke 50 hindurcherstreckt. Das Stopfwerk 42 dient zur Mischung des nicht sortenreinen, gewaschenen und zerkleinerten Recyclats mit einem geeigneten Treibmittel und ist mit dem zum ersten Ringdüsenkanal 20 (sh. Fig. 1 und 2) zugehörigen, nicht gezeichneten ersten Extruder verbunden.

## Patentansprüche

1. Verfahren zur Herstellung von Rippenrohren aus Kunststoff, die eine Innenschicht (32) mit einer glatten Innenrohrfläche und eine Außenschicht (38) mit einer gewellten Außenoberfläche (40) aufweisen, wobei das Material für die Innenschicht (32) und das Material für die Außenschicht (38) gleichzeitig und voneinander getrennt durch einen Spritzkopf (12) in einen Formhohlraum extrudiert werden, der durch einen an den Spritzkopf (12) anschließenden Kühldorn (14) und die Formbacken (18) eines Corrugators (16) festgelegt ist, wobei eine Schicht des Rohres von einem mittels eines chemischen Treibmittels expandierenden Schaum gebildet ist,
**dadurch gekennzeichnet,**
daß als Material für die ein geripptes Längsprofil aufweisende Außenschicht (38) ein nicht sortenreines, gewaschenes und zerkleinertes Recyclat verwendet wird, das mit einem geeigneten Treibmittel gemischt durch einen mit einem Stopfwerk (42) bzw. einer anderen Zwangszuführung versehenen ersten Extruder in den Spritzkopf (12) eingebracht wird, aus dem es vom neuwertigen Material für die rohrförmige Innenschicht (32) getrennt und diese konzentrisch umgebend austritt, und das Material für die Außenschicht (38) nach dem Austritt aus dem Spritzkopf (12) im Raum zwischen der Innenschicht (32) und den Formbacken (18) des Corrugators aufschäumt.

2. Verfahren nach Anspruch 1,
**dadurch gekennzeichnet,**
daß zwischen der Innenschicht (32) und dem Kühldorn (14) Luft zugeführt wird.

3. Verfahren nach Anspruch 1,
**dadurch gekennzeichnet,**
daß für die Außenschicht (38) ein beliebiges Gemisch gängiger Polyolefine außer PVC verwendet wird.

4. Verfahren nach Anspruch 1,
**dadurch gekennzeichnet,**
daß für die Innenschicht (32) ein sortenreines Kunststoffmaterial verwendet wird.

## Claims

1. Method for producing ribbed tubes made of plastic, which tubes have an inner layer (32) having a smooth inner tube surface and an outer layer (38) having a corrugated outer surface (40), the material for the inner layer (32) and the material for the outer layer (38) being extruded simultaneously and separately from one another through an extrusion head (12) into a mould cavity which is defined by a cooling mandrel (14) which adjoins the extrusion head (12), and the mould jaws (18) of a corrugator (16), one layer of the tube being formed by a foam which expands by means of a chemical blowing agent, characterized in that an unsorted, washed and comminuted recycled material is used as material for the outer layer (38) which has a ribbed longitudinal section, which recycled material, having been mixed with a suitable blowing agent, is introduced through a first extruder provided with a stuffing unit (42) or another type of forced feed, into the extrusion head (12) from which it emerges separately from the new-grade material for the tubular inner layer (32) and concentrically surrounding the latter, and the material for the outer layer (38), after emerging from the extrusion head (12), is foamed in the space between the inner layer (32) and the mould jaws (18) of the corrugator.

2. Method according to Claim 1, characterized in that air is fed between the inner layer (32) and the cooling mandrel (14).

3. Method according to Claim 1, characterized in that an arbitrary mixture of customary polyolefins, excluding PVC, is used for the outer layer (38).

4. Method according to Claim 1, characterized in that a sorted plastic material is used for the inner layer (32).

## Revendications

1. Procédé pour la fabrication de tubes nervurés en matière plastique, ces tubes se composant d'une couche interne (32) formant une surface interne de tube lisse, et d'une couche externe (38) formant une surface externe de tube ondulé (40), procédé dans lequel la matière de la couche interne (32) et la matière de la couche externe (38) sont extrudées simultanément et séparément l'une de l'autre par une tête d'injection (12) dans un moule creux constitué par un mandrin de refroidissement et les éléments de mise en forme (18) d'un outil de formation de nervures (16), ce mandrin et ses éléments étant adaptés à la tête d'injection (12), une couche du tube étant formée d'une mousse expansée au moyen d'un agent d'activation chimique,
caractérisé en ce que, comme matière pour la couche externe (38) présentant un profil longitudinal nervuré, on utilise un recyclât de qualité pure, lavé et pulvérisé qui, mis en mélange avec un agent d'activation approprié, au moyen d'un premier extrudeur équipé d'un outillage de passage (42) ou d'un autre moyen d'entraînement forcé, est amené à la tête d'injection (12), à la sortie de laquelle il est séparé de la matière neuve destinée à la couche interne tubulaire (32), et il en sort, en entourant concentriquement ces deux dernières, cette matière pour la couche externe (38), après sa sortie de la tête d'injection (12), formant une mousse expansée dans l'espace compris entre la couche interne (32) et les éléments de mise en forme (18) de l'outil de formation de nervures (16).

2. Procédé selon la revendication 1, caractérisé en ce que de l'air est introduit entre la couche interne (32) et le mandrin de refroidissement (14).

3. Procédé selon la revendication 1, caractérisé en ce que, pour la couche externe (38), on utilise un mélange quelconque de polyoléfines usuel, à l'exception du PVC.

4. Procédé selon la revendication 1, caractérisé en ce que, pour la couche interne (32), on utilise une matière synthétique de qualité pure.
